# EUROPÄISCHE PATENTANMELDUNG

(11) **EP 2 040 355 A2**
(43) Veröffentlichungstag der Anmeldung: **25.03.2009**
(21) Anmeldenummer: 08013305.1
(22) Anmeldetag: 24.07.2008
(51) Int. Cl.: H02K 11/00, H02K 5/136

(54) **Elektronisch kommutierter Motor**

(30) Priorität: 22.09.2007 DE 102007045350
(71) Anmelder: Lutz Pumpen GmbH, 97877 Wertheim (DE)
(72) Erfinder: Lutz, Jürgen, 97877 Wertheim (DE)
(74) Vertreter: Geitz Truckenmüller Lucht

(57) **Zusammenfassung**

2.1 Es ist bekannt, Pumpenmotoren zur Gewährleistung der Explosionssicherheit in druckdicht gekapselte Gehäuse einzusetzen, wobei eine Drehzahlstellung und Motorschaltung nur auf Kosten der Sicherheit möglich gewesen ist, da bekannte Potentiometer und Schalter ihrerseits erheblich zu Funkenschlag beitragen können. Der Erfindung liegt somit die Aufgabe zugrunde, einen Pumpenmotor zu schaffen, der explosionssicher ist und dessen Drehzahlvorgabe trotzdem veränderlich ist.

2.2 Gelöst wird dies über eine berührungslose Signalübertragung durch das Gehäuse hindurch, indem einem Handrad ein oder mehrere Signalgeber, etwa in Form von Dauermagneten, zugeordnet werden und durch Drehen des Handrads verursachte Signale gehäuseinwendig von Signalaufnehmern erfasst und in eine Drehzahlvorgaben und Schaltbefehle umgesetzt werden.

2.3 Motor zur Verwendung mit einer Fass- oder Behälterpumpe

## Beschreibung

Die Erfindung betrifft einen elektronisch kommutierten Motor, insbesondere zur Verwendung mit einer Fass- oder Behälterpumpe und einem Rührwerk, umfassend einen Rotor und einen Stator, wobei der Motor gemeinsam mit einer Schaltungselektronik zur Steuerung des Motors in einem druckfest gekapselten Gehäuse aufgenommen ist.

Ein solcher Motor ist bereits aus der DE 38 25 035 A1 vorbekannt. Solche Motoren werden im Zusammenhang mit anverbundenen oder anflanschbaren Pumpwerken zur Förderung von Flüssigkeiten aller Arten verwendet.

Soweit es sich bei den genannten Flüssigkeiten um gefährliche Substanzen handelt, bestehen auch für die zu verwendenden Pumpen und Pumpenmotoren bestimmte Sicherheitsvorschriften. Durch das Entweichen von explosiblen Gasen kann aufgrund der Funkenbildung im Motor eine erhebliche Explosionsgefahr gegeben sein. Es ist daher üblich, solche Motoren druckgekapselt auszuführen, so dass der Motor in einem von der Außenwelt abgeriegelten Gehäuse aufgenommen ist.

Derart druckgekapselte Gehäuse können nicht mehr ohne Weiteres geöffnet werden, so dass die weitere Entwicklung dahin geht, anstelle der herkömmlichen Bürstenmotoren elektronisch kommutierte Motoren einzusetzen. Dadurch ist der Einsatz verschleißarmer Motoren möglich, so dass die Einsatzdauer eines Motors im Wesentlichen nur noch durch die Lebensdauer der Lager begrenzt ist, welche die Rotorwelle des Motors durch die Gehäusewand hindurch nach außen führen.

Durch diese Verbesserung ist es bekanntermaßen auch möglich, die Schaltungselektronik des Motors in das Gehäuse mit hinein zu verlegen, so dass nur noch ein gemeinsames Gehäuse erforderlich ist und keine Drahtverbindungen aus dem druckgekapselten Gehäuse herausragen müssen, was ein zusätzliches Risiko der Funkenbildung darstellt.

Üblicherweise kann bei den vorstehend beschriebenen Motoren die Drehzahl eingestellt werden, so dass unterschiedliche Arbeitsaufgaben je nach Bedarf in unterschiedlicher Geschwindigkeit erledigt werden können. So lehrt die DE 38 25 035 A1 den Einsatz eines Potentiometers, um die Drehzahl des Motors strom- und lastabhängig einzustellen.

Gerade bei den meist als Gleitwiderstand ausgeführten Potentiometern kann allerdings ein Funkenschlag auftreten, so dass derartig ausgeführte Pumpenmotoren den Sicherheitsanforderungen für den Explosionsschutz nicht mehr genügen.

Ebenfalls besteht in eben diesem Zusammenhang das Bedürfnis, ein definiertes Schaltsignal für das Ein- bzw. Ausschalten des Motors zu erzeugen, welches ebenfalls ohne die Gefahr eines möglichen Funkenschlags in das Innere des Gehäuses übertragen werden kann.

Es liegt der Erfindung vor diesem Hintergrund die Aufgabe zugrunde, einen Motor - insbesondere zur Verwendung mit einer Fass- oder Behälterpumpe und einem Rührwerk - zu schaffen, bei dem Schalt- und Stellsignale trotz einer explosionsgeschützten Ausführung durch den Benutzer komfortabel von außen vorgegeben werden können.

Gelöst wird diese Aufgabe mit einem elektronisch kommutierten Motor gemäß den Merkmalen des Hauptanspruchs. Weitere sinnvolle Ausgestaltungen können den Unteransprüchen entnommen werden.

Der elektronisch kommutierte Elektromotor ist von einem druckgekapselten Gehäuse umgeben, welches den Sicherheitsanforderungen des Explosionsschutzes entspricht. In dem Gehäuse ist ebenfalls die vollständige Schaltungselektronik aufgenommen, welche für den Einsatz des Motors vonnöten ist. Dazu gehören im Einzelnen unter Anderem die Leistungselektronik, die Steuerelektronik und die Drehzahlstellerelektronik. Erfindungsgemäß sind dem Gehäuse außenseitig Signalgeber zugeordnet, welche Signale berührungslos durch die Gehäusewand hindurch zu Signalaufnehmern übermitteln. Die so transportierten Signale werden von der Schaltungselektronik erfasst und in Schalt- und Stellbefehle umgesetzt, die wiederum mithilfe der in der Schaltungselektronik enthaltenen Drehzahlstellerelektronik an den Motor weitergegeben werden. Die berührungslose Übertragung kann etwa magnetisch, oder auch induktiv oder durch andere Übertragungsmittel durchgeführt werden.

Neben der Verwendung des Elektromotors mit Fass- und Behälterpumpen kann dieser auch mit beliebigen anderen Pumpen und weitere übliche Anwendungen von Elektromotoren eingesetzt werden.

Zur verbesserten Handhabbarkeit erfolgt die Signalerzeugung durch Drehung eines Handrads, welches dem Gehäuse auswendig zugeordnet ist. Dem Handrad ist wenigstens ein Drehzahl-Signalgeber derart zugeordnet, dass die Drehung des Handrads zu einer Bewegung des Drehzahl-Signalgebers führt. Diese Bewegung stellt eine Signalform dar, welche der Drehzahl-Signalaufnehmer, der im Bereich des Handrads gehäuseinwendig angeordnet ist, erkennen und auswerten kann.

Es ist unter Sicherheitsaspekten wünschenswert, dass der Motor nicht aus der Drehzahlvorgabe "Null" heraus bis zur gewünschten Drehzahl hochgeregelt werden kann, sondern dass der Motor in der Drehstellung "Null" ein eindeutiges Schaltsignal bekommt, welches den Motor abschaltet. Hierzu weist das Handrad einen, vorzugsweise zusätzlichen, Signalgeber als Einschalt-Signalgeber auf. Auch dieser Einschalt-Signalgeber gibt ein vorzugsweise magnetisches Schaltsignal, indem ein Einschalt-Signalaufnehmer, etwa ein magnetischer Schalter, aufgrund der Anwesenheit des Einschalt-Signalgebers ein Schaltsignal zum Abschalten des Motors gibt.

Diese Anordnung wird durch einen Gegensignalgeber verbessert, welcher ortsfest zu dem Einschalt-Signalaufnehmer angebracht ist und diesen stets dann auslöst, wenn der Einschalt-Signalgeber durch Drehen des Handrads außer Eingriff des Einschalt-Signalaufnehmers gebracht wird. Es wird hierdurch gewährleistet, dass der Einschalt-Signalaufnehmer stets ein definiertes Schaltsignal bekommt. Eine mögliche konkrete Lösung sieht hierbei vor, dass der Gegensignalgeber ein schwächeres, gegenpoliges magnetisches Feld zu dem Einschalt-Signalgeber erzeugt, so dass in Anwesenheit des Einschalt-Signalgebers dieser dominiert.

Rückt also der Einschalt-Signalgeber durch Drehen des Handrads aus dem Bereich des Einschalt-Signalaufnehmers heraus, so schaltet der Gegensignalgeber den Einschalt-Signalaufnehmer um und der Motor wird aufgrund des so erzeugten Einschaltsignals gestartet.

Zur verbesserten Sicherheit ist es ferner sinnvoll, sicherzustellen, dass etwa nach einem Stromausfall der Motor nicht unkontrolliert wieder anlaufen kann. Hierzu ist ein weiterer Signalgeber als Freigabe-Signalgeber vorzusehen, welcher in der Nullstellung des Handrads einen ortsfesten Freigabe-Signalaufnehmer auslöst. Ein Starten des Motors soll lediglich möglich sein, wenn gleichzeitig der Einschalt-Signalgeber ein Einschaltsignal gibt und der Freigabe-Signalgeber anzeigt, dass sich der Drehzahlsteller in der Nullposition befindet. Hierdurch ist gewährleistet, dass ein Einschalten des Motors lediglich im tatsächlich ausgeschalteten Zustand möglich ist.

Um eine gegenseitige ungewünschte Beeinflussung der Signalgeber zu vermeiden, sind Freigabe- und Einschalt-Signalgeber um zumindest näherungsweise 180° winkelversetzt auf dem Handrad anzuordnen. Ferner können die Signalgeber mit unterschiedlichem Abstand zur Drehachse des Handrads angeordnet sein, um so ein Überstreichen des jeweils anderen Signalaufnehmers zu vermeiden. Schließlich ist es insbesondere sinnvoll, die Signalgeber in zueinander entgegengesetzter Wirkrichtung anzuordnen, so dass ein Schalten eines Signalaufnehmers durch den "falschen" Signalgeber nicht erfolgen kann.

Ferner ist es sinnvoll, wenn die Signalgeber Dauermagneten sind, so dass eine Bewegung derselben eine Veränderung des Magnetfelds im Bereich der Signalaufnehmer bewirkt. Diese Feldänderung wird vom jeweiligen Signalaufnehmer ausgewertet und als Stellsignal von der Schaltelektronik an den Motor weitergeleitet. Insofern können die Signalaufnehmer mit Vorteil etwa als Reedkontakte ausgestaltet sein. Die von diesen Kontakten auswertbaren Signale bestehen demnach aus Magnetfeldern und deren Änderungen, welche von den Kontakten detektiert werden und auf welche sie reagieren.

Der Motor passt aufgrund der von der Schaltelektronik kommenden Signale seine Drehzahl an die Vorgabe an, soweit dies die abtriebsseitig auf die Motorwelle, mithin auf eine etwa angeflanschte Pumpenwelle, wirkende Last zulässt. Bei entsprechender Last kann die geforderte Drehzahl durch eine entsprechende Einstellung der Spulenströme bzw. der korrespondierenden Spannungen nicht erreicht werden, so dass bezüglich der Drehzahl eine Diskrepanz zwischen Sollwert und Istwert entsteht. Es bietet sich insoweit an, einen Regelkreis hierfür vorzusehen, in welchem allerdings der Istwert der Drehzahl als Stellgröße auftreten muss. Zur Erfassung der Drehzahl ist der Rotorwelle ein magnetischer Dipol zugeordnet, welcher im Laufe einer Umdrehung der Rotorwelle gleichfalls einmal eine volle Drehung durchläuft. Mittels einer im Bereich des Dipols angeordneten Hall-Sonde kann durch entsprechende Messung des durch den Dipol erzeugten, magnetischen Feldes in diesem Bereich der Istwert der Motordrehzahl erfasst werden. Auf der Basis eines Soll-/Istwertvergleichs kann auf diese Weise eine Drehzahlregelung durchgeführt werden.

In sinnvoller Weiterbildung des Gedankens verschiedener Maßnahmen zur Einwirkung auf die Motordrehzahl werden auch Betriebsparameter des Motors, wie etwa Sollwert und Istwert der Drehzahl, Temperaturen sowie Ströme und Spannungen von der Schaltungselektronik überwacht. Hierdurch sind im Falle von Grenzwertabweichungen Maßnahmen möglich, um die Sicherheit sowohl der beteiligten Personen, als auch die Funktionsfähigkeit des Motors zu gewährleisten.

Im Sinne einer solchen Motorschutzregelung kann bei Abweichungen der Betriebsparameter von vorgegebenen oder vorgebbaren Grenzwerten und/oder von Sollwerten von der Schaltungselektronik selbsttätig eine Abschaltung des Motors ausgelöst werden. Dadurch ist eine Überlastung des Motors und ein vorzeitiger Defekt aus diesem Grund vermieden.

Sobald nach einer Abschaltung die Betriebsparameter wieder in den Sollbereich gekommen sind, kann mit Vorteil die Schaltungselektronik den Motor auch wieder in Betrieb nehmen. Dies ist selbstverständlich nicht möglich, wenn der Motor zwischenzeitlich von Hand durch den Benutzer abgeschaltet worden ist.

Dem Gehäuse ist mit Vorteil wenigstens ein, vorzugsweise aber zwei, Handgriffe so zugeordnet, dass eine Bedienung des Motors im Einhandbetrieb möglich ist. Es ist dann beispielsweise möglich, den Motor einhändig zu halten und gleichzeitig eine Drehzahlvorgabe mithilfe des Signalgebers vorzunehmen.

In vorteilhafter Weiterbildung ist der Handgriff Teil eines Verriegelungsmechanismus, wobei der Handgriff in eine Verriegelungsposition verbringbar ist, in der das Gehäuse mithilfe von Verrastungselementen an einer Pumpenwelle, einem Pumpenfuß oder einem Behälter befestigbar ist. Durch ein Verschwenken des wenigstens einen Handgriffs in eine Entriegelungsposition wird die Verriegelung in der Folge wieder freigegeben.

Rotor und Stator sind mit Vorteil geblecht und der Rotor ist mit Aluminium umgossen. Das Gehäuse ist vorzugsweise doppelwandig ausgeführt.

Nachfolgend wird die oben beschriebene Erfindung anhand eines in der Zeichnung dargestellten Ausführungsbeispiels näher erläutert.

### Es zeigen

- Figur 1: einen erfindungsgemäßen Motor in einem Gehäuse in einer perspektivischen Ansicht von schräg oben,
- Figur 2: den Motor aus Figur 1 in einer direkten Draufsicht,
- Figur 3: den Motor aus Figur 2 in der in Figur 2 angedeuteten Schnittdarstellung,
- Figur 4: den in Figur 3 angedeuteten Bildausschnitt in vergrößerter Schnittdarstellung,
- Figur 5: die in Figur 2 gezeigte Draufsicht des Motors mit dem Detail des Handrads, sowie
- Figur 6: das in Figur 5 gezeigte Detail in einer anderen Stellung des Handrads.

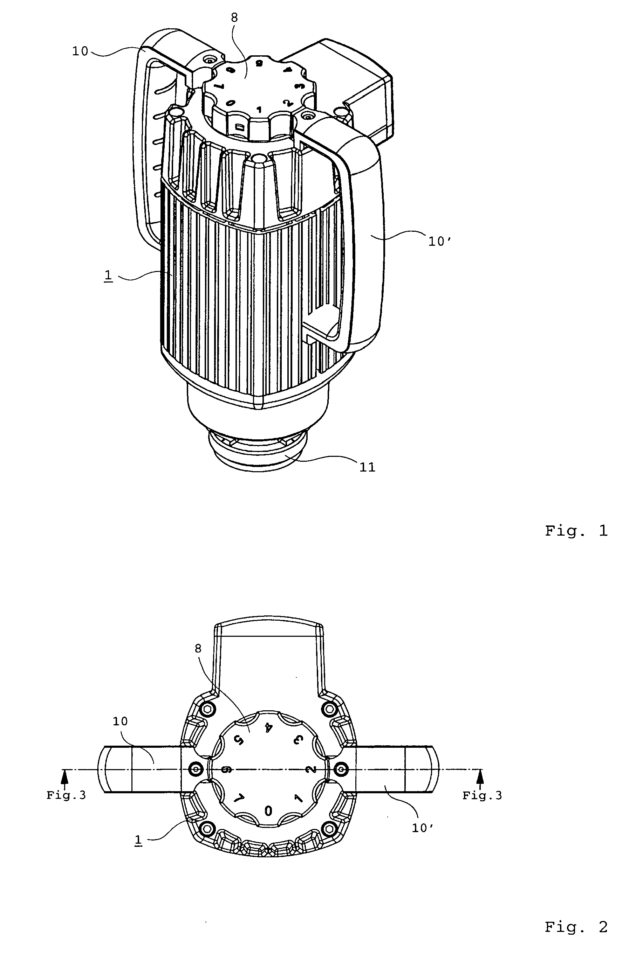

Figur 1 zeigt ein druckfest gekapseltes Gehäuse 1 eines Motors, wie er zur Förderung von Flüssigkeiten aus Fässern oder Behältern oder als Antrieb für ein Rührwerk eingesetzt wird. Zur Kupplung des Motors mit einem Pumpenfuß etc. weist das Gehäuse 1 an seiner bestimmungsgemäß unteren Seite einen Anschlussflansch 11 auf, mithilfe dessen eine kraftschlüssige Verbindung mit einer Pumpenwelle herstellbar ist. Das Gehäuse 1 ist mit Handgriffen 10,10' versehen, so dass ein Benutzer den Pumpenmotor ein- oder zweihändig bedienen kann. Durch die druckfeste Kapselung entspricht der Pumpenmotor den Bestimmungen zum Explosionsschutz. Zentral zwischen den Handgriffen 10,10' ist auf der bestimmungsgemäß oben liegenden Seite des Gehäuses 1 ein Handrad 8 vorgesehen, welches zur Vorgabe einer Solldrehzahl vorgesehen ist. Dem Handrad 8 ist ein Dauermagnet als Drehzahl-Signalgeber 6 zugeordnet, so dass durch eine Drehung des Handrads 8 eine Feldänderung im Bereich des Drehzahl-Signalgebers 6 resultiert. Diese Feldänderung wird gehäuseinwendig von einem Drehzahl-Signalaufnehmer 7 erfasst und an eine innen liegende Schaltungselektronik 5 weitergeleitet.

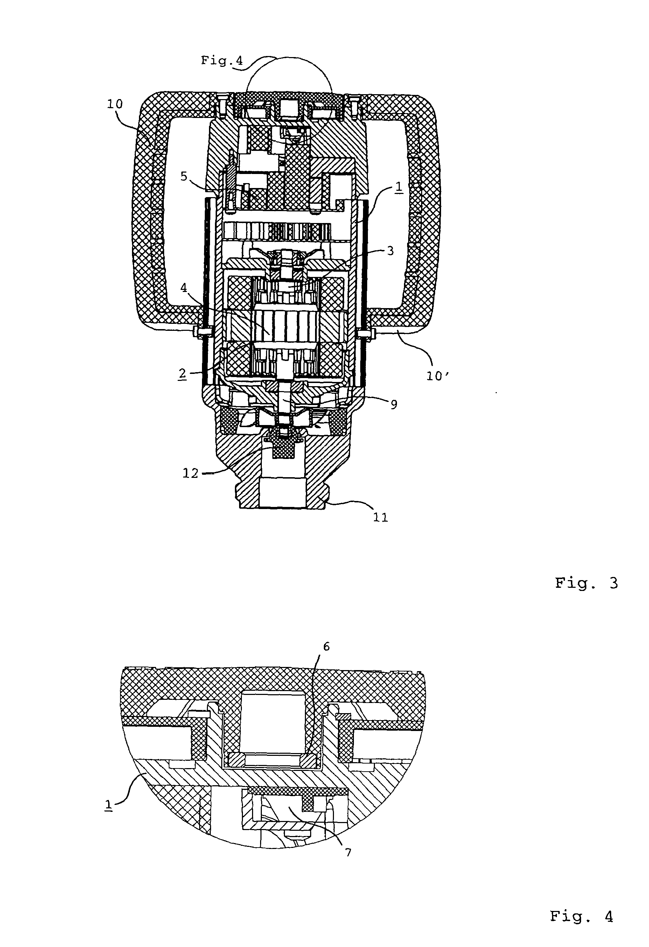

Figur 2 zeigt den Pumpenmotor aus Figur 1 in einer Draufsicht. Entlang einer gestrichpunkteten Linie wird ein gedachter Schnitt durch den Motor geführt, wobei in Figur 3 ein Schnittbild der so entstehenden Fläche gezeigt ist.

Figur 3 zeigt den Pumpenmotor in einem Querschnitt, in dem der in dem Gehäuse 1 befindliche Motor 2 dargestellt ist. Auf der dem Rotor 3 des Motors 2 zugeordneten Rotorwelle 9 ist ein Dipolmagnet angeordnet, welcher sich im Betrieb des Motors 2 mit dem Rotor 3 dreht. Mittels einer hier nicht näher dargestellten Hall-Sonde ist eine Erfassung des durch den genannten Dipolmagneten erzeugten Magnetfeldes ermöglicht, wodurch sich durch Auswertung der Messwerte der Hall-Sonde die Istdrehzahl der Rotorwelle 9 ableiten lässt. Dies stellt einen ersten Teil eines Regelkreises zur Regelung der Drehzahl dar.

Figur 4 zeigt den zuvor in Figur 3 angedeuteten Ausschnitt des Schnittbilds in vergrößertem Maßstab. Der eng karierte Bereich entspricht dem Handgriff 8, in welchem als Drehzahl-Signalgeber 6 ein Dauermagnet angeordnet ist. Durch eine Drehung des Handgriffs 8 und somit auch des Drehzahl-Signalgebers 6 wird eine Magnetfeldänderung bewirkt, welche auch von einem Drehzahl-Signalaufnehmer 7 innerhalb des Gehäuses erfassbar ist. Aus einem Messsignal über diese Feldänderung wird mithilfe der Schaltungselektronik 5 eine Drehzahlvorgabe, also eine Solldrehzahl, ermittelt, die der Einstellung des Handrads 8 entspricht. Durch die berührungslose Übertragung des Signals durch die Wand des Gehäuses 1 ist die Druckkapselung unbetroffen und somit entspricht das Gehäuse weiterhin den Anforderungen betreffend der Explosionssicherheit.

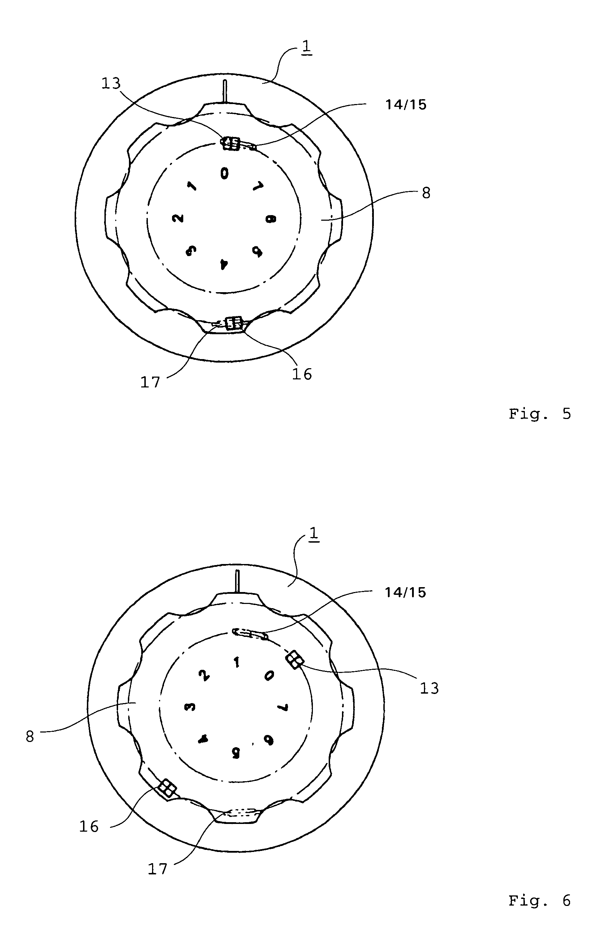

Figur 5 zeigt nochmals eine Draufsicht auf das Gehäuse 1, insbesondere Details des Handrads 8. Hier sind weitere Signalgeber 13,16 vorgesehen, nämlich ein Einschalt-Signalgeber 13 und ein Freigabe-Signalgeber 16. Befindet sich das Handrad 8 in der in Figur 5 gezeigten Nullstellung, so kommt der Einschalt-Signalgeber 13 im Bereich eines Einschalt-Signalaufnehmers 14 zum Liegen. Der magnetische Einschalt-Signalgeber 13 bewirkt aufgrund seines Magnetfeldes, dass der Einschalt-Signalaufnehmer 14, welcher als Reedkontakt ausgestaltet ist, ein Ausschaltsignal an den Motor 2 weitergibt. Wird nun das Handrad 8 in eine andere Position gedreht, so verlässt der Einschalt-Signalgeber 13 den Bereich des Einschalt-Signalaufnehmers 14 und erzeugt somit ein Einschaltsignal. Um ein sicheres Schalten zu gewährleisten, ist dem Einschalt-Signalaufnehmer 14 ein Gegensignalgeber 15 zugeordnet, welcher den Einschalt-Signalaufnehmer 14 definiert schaltet, wenn der Einschalt-Signalgeber 13 außer dessen Eingriff liegt. Ansonsten neutralisiert der Einschalt-Signalgeber 13 das Feld des Gegensignalgebers.

Ferner ist ein Freigabe-Signalgeber 16 vorgesehen, welcher ein Freigabesignal genau dann erzeugt, wenn der Motor 2 gestartet werden soll und sich das Handrad 8 in Nullstellung befindet. Dies soll verhindern, dass etwa bei einem Stromausfall der Motor 2 bei voller Drehzahl abschaltet und bei wieder einsetzender Stromversorgung sofort wieder einschaltet. Entsprechend kann der Motor 2 vielmehr nur dann wieder gestartet werden, wenn ein Freigabesignal vorliegt, mithin also das Handrad in seine Nullstellung verbracht wurde und der Freigabe-Signalgeber 16 in Eingriff eines Freigabe-Signalaufnehmers 17 ist.

Figur 6 zeigt das Handrad 8 in einer anderen als der Nullstellung. Die Signalgeber 13,16 und die Signalaufnehmer 14,17 überdecken sich daher nicht mehr und der Motor wurde gestartet. Die beiden gezeigten Signalgeber 13,16 bewegen sich auf unterschiedlichen Kreisbahnen um die Drehachse des Handrads 8 und sind gegenpolig angeordnet, so dass etwa der Freigabe-Signalgeber 16 bei einer weiteren Drehung nicht den Einschalt-Signalgeber 14 betätigen kann.

Vorstehend ist somit ein elektronisch kommutierter Motor, insbesondere zur Verwendung mit einer Fass- oder Behälterpumpe und einem Rührwerk beschrieben, welcher trotz der Einhaltung der Vorgaben des Explosionsschutzes Mittel zum sicheren Erzeugen von Schalt- und Stellsignalen aufweist, indem eine berührungslose, insbesondere magnetische, Signalübertragung durch die druckdicht gekapselte Gehäusewand des Motors hindurch geschaffen wird.

### BEZUGSZEICHENLISTE

- 1: Gehäuse
- 2: Motor
- 3: Rotor
- 4: Stator
- 5: Schaltungselektronik
- 6: Drehzahl-Signalgeber
- 7: Drehzahl-Signalaufnehmer
- 8: Handrad
- 9: Rotorwelle
- 10,10': Handgriffe
- 11: Anschlussflansch
- 12: Mitnehmer
- 13: Einschalt-Signalgeber
- 14: Einschalt-Signalaufnehmer
- 15: Gegensignalgeber
- 16: Freigabe-Signalgeber
- 17: Freigabe-Signalaufnehmer

## Patentansprüche

1. Elektronisch kommutierter Motor, insbesondere zur Verwendung mit einer Fass- oder Behälterpumpe und einem Rührwerk, umfassend einen Rotor (3) und einen Stator (4), wobei der Motor (2) gemeinsam mit einer Schaltungselektronik (5) zur Steuerung des Motors (2) in einem druckfest gekapselten Gehäuse (1) aufgenommen ist,
**dadurch gekennzeichnet, dass** die Drehzahl sowie zumindest ein Schaltsignal des Motors (2) mittels wenigstens eines berührungslosen, vorzugsweise magnetischen, gehäuseauswendig angeordneten Signalgebers (6) einstellbar ist, mit dessen Hilfe Stell- bzw. Schaltsignale berührungsfrei zu wenigstens einem gehäuseinwendig angeordneten Signalaufnehmer (7) übermittelbar sind, welche von der Schaltungselektronik (5) auswertbar und in Drehzahlvorgaben bzw. Schaltbefehle umsetzbar sind.

2. Motor gemäß Anspruch 1, **dadurch gekennzeichnet, dass** wenigstens ein Drehzahl-Signalgeber (6) dergestalt an einem Handrad (8) angeordnet ist, dass sich durch Drehung des Handrads (8) eine durch wenigstens einen Drehzahl-Signalaufnehmer (7) feststellbare Signaländerung einstellt.

3. Motor gemäß einem der vorhergehenden Ansprüche 1 oder 2, **dadurch gekennzeichnet, dass** zumindest ein Einschalt-Signalgeber (13) zur Erzeugung eines Einschaltsignals an dem Handrad (8) vorgesehen ist, welcher in einer Nullstellung des Handrads (8) einen bezüglich des Stators (4) ortsfesten Einschalt-Signalaufnehmer (14) schaltet.

4. Motor gemäß Anspruch 3, **dadurch gekennzeichnet, dass** dem Einschalt-Signalaufnehmer (14) ortsfest ein Gegensignalgeber (15) zugeordnet ist, dessen Signal in der Nullstellung des Handrads (8) von dem Einschalt-Signalgeber (13) neutralisiert oder zumindest geschwächt wird.

5. Motor gemäß Anspruch 4, **dadurch gekennzeichnet, dass** der Einschalt-Signalaufnehmer (14) außerhalb der Nullstellung des Handrads (8) von dem Gegensignalgeber (15) geschaltet ist, somit außerhalb der Nullstellung des Handrads (8) ein Einschaltsignal erzeugt wird.

6. Motor gemäß einem der vorhergehenden Ansprüche, **dadurch gekennzeichnet, dass** dem Handrad (8) ein Freigabe-Signalgeber (16) zur Erzeugung eines Freigabesignals angeordnet ist, welcher in einer Nullstellung des Handrads (8) einen bezüglich des Stators ortsfest angeordneten Freigabe-Signalaufnehmer (17) schaltet.

7. Motor gemäß einem der vorhergehenden Ansprüche, **dadurch gekennzeichnet, dass** dem Handrad (8) ein Einschalt-Signalgeber (13) und ein Freigabe-Signalgeber (16) um zumindest näherungsweise 180° winkelversetzt angeordnet sind.

8. Motor gemäß Anspruch 7, **dadurch gekennzeichnet, dass** Einschalt-Signalgeber (13) und Freigabe-Signalgeber (16) durch eine Drehung des Handrads (8) auf konzentrischen aber unterschiedlich großen Kreisbahnen um die Drehachse des Handrads (8) herum beweglich sind.

9. Motor gemäß einem der Ansprüche 6 bis 8, **dadurch gekennzeichnet, dass** Einschalt-Signalgeber (13) und Freigabe-Signalgeber (16) in entgegengesetzter Wirkrichtung auf dem Handrad (8) angeordnet sind.

10. Motor gemäß einem der vorhergehenden Ansprüche, **dadurch gekennzeichnet, dass** zumindest der Einschalt-Signalaufnehmer (14) und der Freigabe-Signalaufnehmer (17) als Reedkontakte ausgestaltet sind.

11. Motor gemäß einem der vorhergehenden Ansprüche, **dadurch gekennzeichnet, dass** die Signale in jeweils von den Signalgebern verursachten Magnetfeldern bestehen.

12. Motor gemäß einem der Ansprüche 1 oder 2, **dadurch gekennzeichnet, dass** der Drehzahl-Signalgeber (6) ein Dauermagnet ist oder zumindest einen solchen umfasst.

13. Motor gemäß einem der vorhergehenden Ansprüche, **dadurch gekennzeichnet, dass** dem Motor (2) wenigstens eine, bezüglich des Stators (4) ortsfeste, Hallsonde zugeordnet ist und der Rotor (3) eine Rotorwelle (9) aufweist, welche einen magnetischen Dipol, vorzugsweise in Form eines Dauermagneten, aufweist.

14. Motor gemäß einem der vorhergehenden Ansprüche, **dadurch gekennzeichnet, dass** dem Gehäuse (1) wenigstens ein Handgriff, vorzugsweise aber zwei Handgriffe (10,10'), zum Halten des Gehäuses durch einen Benutzer zugeordnet ist und wenigstens ein Handgriff (10,10') über eine schwenkbare Verbindung an das Gehäuse (1) angelenkt ist und in einer Verriegelungsposition eine Verriegelung mit einer Halteausnehmung eines Pumpwerks in Eingriff setzt.
